# EUROPEAN PATENT SPECIFICATION

(11) **EP 0 488 312 B1**
(45) Date of publication and mention of the grant of the patent: **18.01.1995**
(21) Application number: 91120431.1
(22) Date of filing: 28.11.1991
(51) Int. Cl.: E04F 15/024

(54) **Method for manufacturing system floor and floor base for system floor**
Verfahren zum Herstellen eines Systemfussbodens und Bodenstützfläche für Systemfussboden
Méthode pour la fabrication d'un système de plancher et base pour système de plancher

(30) Priority: 29.11.1990 JP 333075/90; 29.11.1990 JP 333076/90
(43) Date of publication of application: 03.06.1992
(73) Proprietor: KABUSHIKI KAISHA TOSHIBA, Kawasaki-shi, Kanagawa-ken 210 (JP)
(72) Inventor: Takeda, Fumio, c/o Intellectual Property Division, Minato-ku, Tokyo 105 (JP); Kojima, Yoshio, c/o Intellectual Property Division, Minato-ku, Tokyo 105 (JP); Ishibashi, Yutaka, c/o Intellectual Property Div., Minato-ku, Tokyo 105 (JP); Tsushima, Isako, c/o Intellectual Property Div., Minato-ku, Tokyo 105 (JP); Sugimoto, Kenji, Chigasaki-shi, Kanagawa-ken (JP); Tanaka, Hideo, Kamakura-shi, Kanagawa-ken (JP); Takahashi, Hidetoshi, Konan-ku, Yokohama-shi (JP); Sumiyoshi, Fumio, Iruma-shi, Saitama-ken (JP)
(74) Representative: Henkel, Feiler, Hänzel & Partner

(56) References cited:
- EP-A- 0 125 914
- EP-A- 0 218 108
- EP-A- 0 367 176
- EP-A- 0 385 876
- GB-A- 2 190 936

## Description

The present invention relates to a system floor comprising a rectangular floor base member with protruding props and a floor panel supported by said props, and to a method for manufacturing a floor base for the system floor which are used to provide an underfloor shielding wire such as a power cable and a signal cable for various types of equipments realizing an office automation.

In conventional, as a system floor which is used to provide an underfloor shielding wire such as a power cable and a signal cable for various types of equipments realizing an office automation, for example, Published Unexamined Japanese Utility Model Application No. 61-76045 discloses the following structure:

Insertion blocks having specific forms to be engaged with each are integrally formed on a peripheral portion of a rectangular floor base to be formed on a base floor. Then, the rectangular floor base is formed on the surface of the base floor as the insertion blocks are coupled to each other.

Moreover, Published Unexamined Japanese Patent Application No. 60-40472 discloses the following structure:
A plurality of props is formed on a lower unit, and an upper unit is mounted to be fixed to the lower unit by these props, thereby the upper unit is formed on the surface of the basic floor.

However, in the above-mentioned conventional structure, there are problems in the various points such as construction workability, conformability, and the like. More specially, in the above-mentioned conventional structure, a bottom plate or a bottom portion of a base member, which is called a base plate, are shaped flat. Due to this, a rickety state is generated if the base member is not formed to be flush with the surface of the base floor, so that conformability to the surface of the base floor is lost. In this case, in order to form the base member to be flush with the surface of the base floor, a high flat accuracy is required in finishing the surface of the base floor. Therefore, there are problems in the various points such as a construction cost, a construction period of time, and workability.

Moreover, in the structure in which the floor base is formed on the surface of the base floor as the insertion blocks are coupled to each other, mutual insertion work of the blocks are need between the adjacent floor bases on each side (four sides). Due to this, it requires much labor and time to carry out the construction working including the above mutual insertion work, and there is a problem in that workability worsens. Moreover, in the structure of the mutual insertion work of the blocks, if the mutual insertion of the blocks is tightened so as to firmly and integrally couple the floor bases to each other, much time is required by the construction work and workability worsens more and more. Furthermore, conformability to the surface of the base floor also worsens. If the mutual insertion of the blocks is loosened, the construction work is made easy. However, the floor bases cannot be firmly and integrally coupled to each other, and stability of the upper floor surface and flatness are lost.

Moreover, in the structure in which the upper unit is mounted to be fixed to the lower unit by the plurality of props, since the lower units are arranged on the surface of the base floor and the upper units are mounted to be fixed thereto, the construction work is relatively easily carried out. However, since the lower units are integrally coupled to each other, the stability of the upper floor surface and flatness are lost.

In order to solve the above problems, Japanese Patent Application No. 1-242835 discloses a floor base having the structure in which the props having the same height are formed on each latticed frame cross section, and support a floor panel at many points, and conformability to the surface of the base floor is good and construction work can be easily carried out.

However, in the above-structured floor base, since the number of the props is integrally formed on the latticed frame, the construction becomes complicated and there are problems in the manufacturing cost and treatment.

From EP-A-0 367 176 A3 there is known a floor system comprising the features of the preamble of claim 1. In this system rectangular base members are placed adjacent to each other on a floor surface. On the top surface of the base members there are attached multiple columnar support members and a floor panel is placed on top of the support members. In this prior art floor system, however, the support members are formed independently from the base members and therefore a large number of parts are required to form the floor system.

Another floor system described in EP-A-0 385 876 A1 essentially is only formed by floor panels having their support members formed on the lower side thereof. Height adjusting means are arranged in a space in the corner of four adjacing floor panels and supported directly on the floor. With this prior art floor system only the four adjacing floor panels can be adjusted altogether with respect to their height positions and a comparatively large opening is required in the corner portions of the floor members. Further, with this known height adjusting structure either a range of height adjustment is small or an adjustment screw member is likely to project beyond the top surface of the floor panels.

An object of the invention is to provide a floor system in which the number of parts is reduced and a flat adjustment is simply and quickly carried out while durability and conformability are improved.

Another object of the present invention is to provide a method for manufacturing a floor base in which the number of structural parts can be minimized and the floor base can be easily manufactured with reasonable cost.

The system floor of the present invention comprises the features recited in claim 1 and the method for manufacturing a floor base according to the invention comprises the steps defined in claim 7.

Thereby, the flat adjustment of a floor system can be easily carried out with the simple structure in which the number of the parts is reduced, and the construction work is easily and quickly carried out.

Further, there can be provided a floor structure in which the number of the parts can be reduced, the structure is simplified, the construction work can be easily and quickly carried out, the manufacturing cost can be reduced, and durability and conformability are improved.

With the method for manufacturing a floor base according to the invention, the number of the structural parts is minimized, the floor can be easily manufactured with the simple structure and reasonable cost.

This invention can be more fully understood from the following detailed description when taken in conjunction with the accompanying drawings, in which:
Fig. 1 is an exploded perspective view showing the entire structure of a floor panel according to one embodiment of the system floor of the present invention;
Fig. 2 is a plane view showing the floor base shown in Fig. 1;
Fig. 3 is a cross sectional view taken along the line A - A of Fig. 2;
Fig. 4 is a cross sectional view taken along the line A - A of the structure in which reinforcing processes (concrete packing and hardening process) for a prop is added to a skin of the Fig. 3;
Fig. 5 is a cross sectional view showing an enlarged structure of the prop portion shown in Figs. 1 to 3;
Fig. 6 is a cross sectional view showing a state that an electrical part is attached to a central prop (auxiliary prop) shown in Figs. 1 to 2;
Figs. 7A and 7B are perspective views showing the structure of the floor panel shown in Fig. 1; and
Fig. 8 is a perspective view showing a rib structure of the floor panel in the other embodiment of the system floor of the present invention.

Embodiments of the present invention will be explained with reference to the drawings.

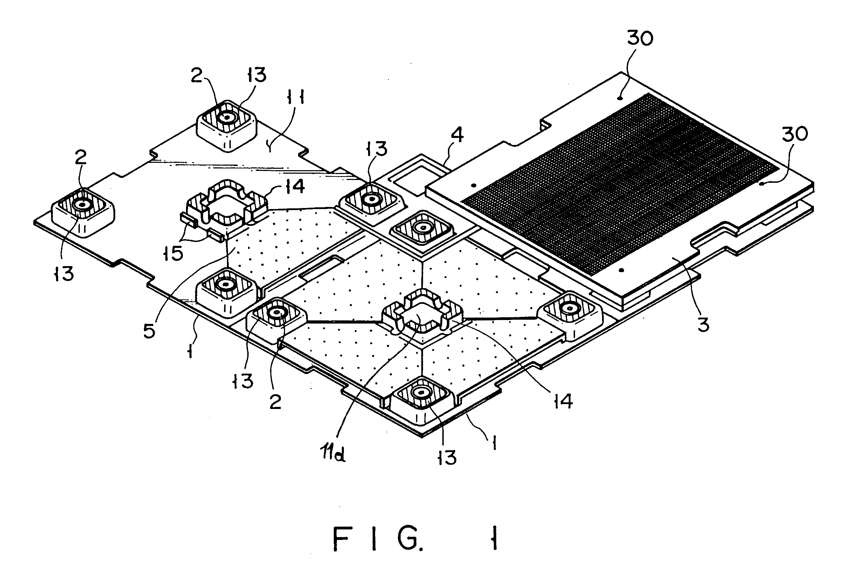

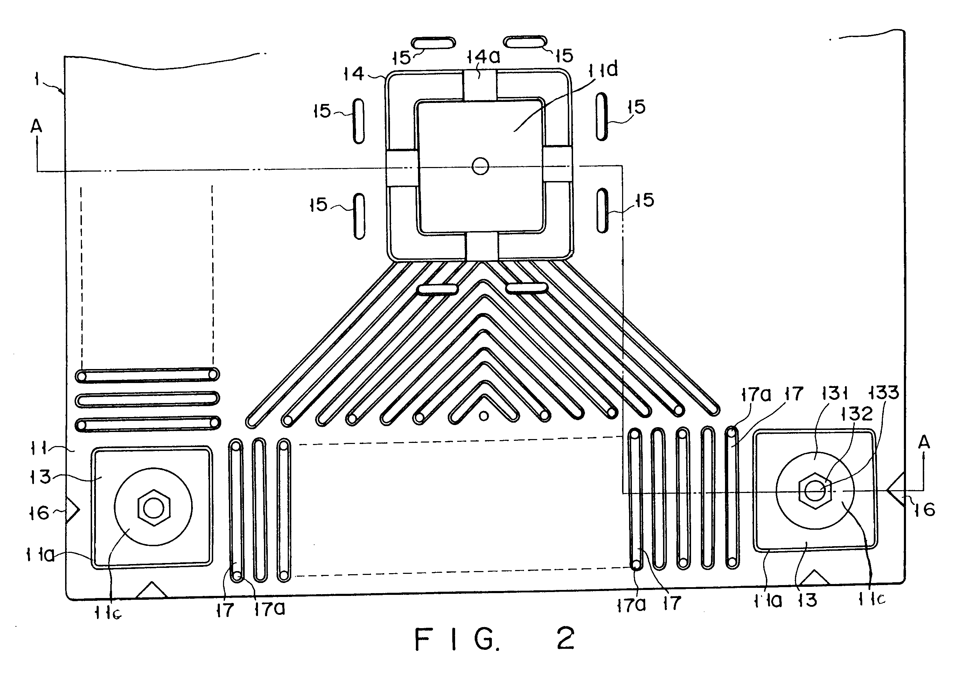

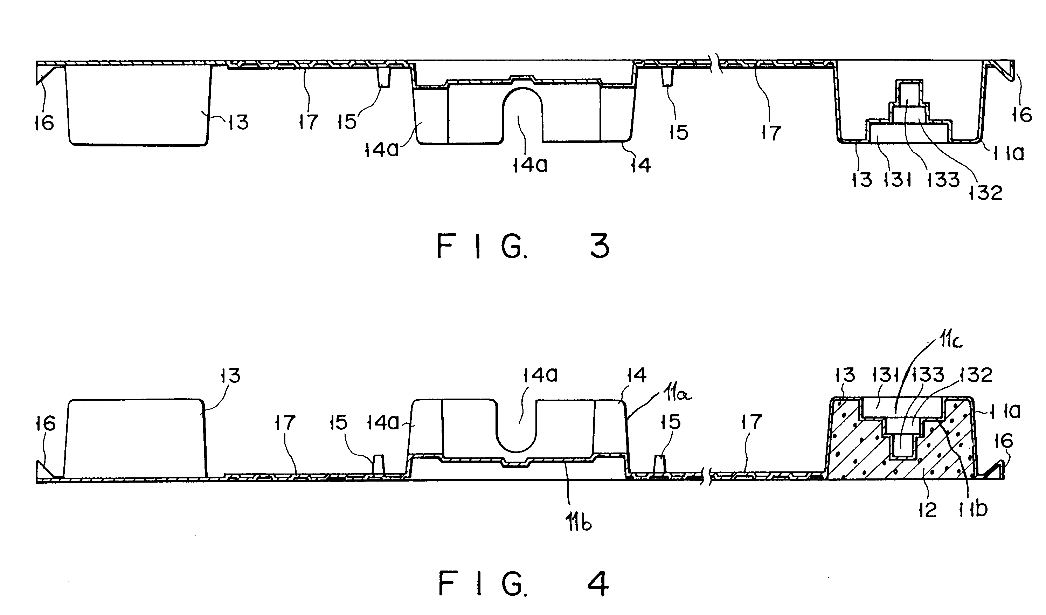

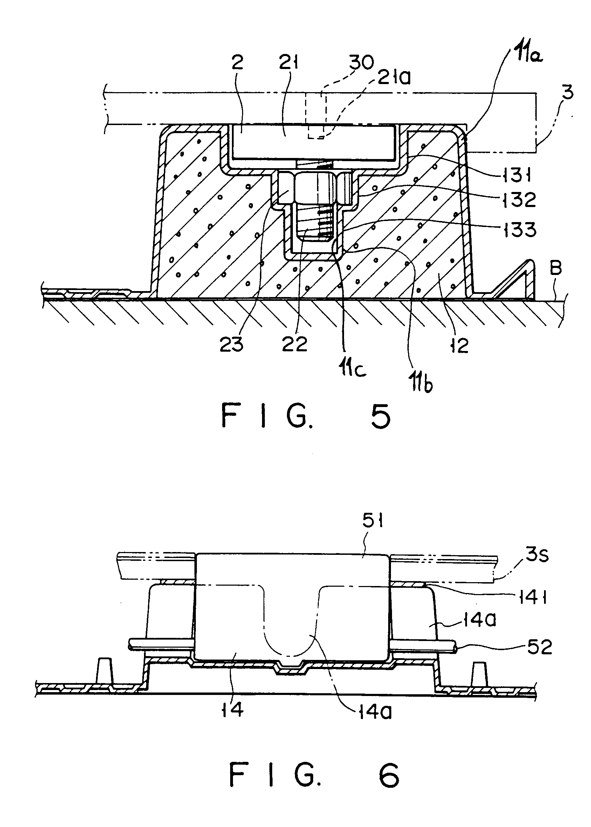

Figs. 1 through 6 show one embodiment of the present invention. Fig. 1 is an exploded perspective view showing the entire structure of a floor panel. Fig. 2 is a plane view showing the floor base. Fig. 3 is a cross sectional view taken along the line A - A of Fig. 2. Fig. 4 is a cross sectional view showing the enlarged structure of a prop portion of the corner shown in Figs. 1 and 2. Fig. 5 is a cross sectional view showing a state that an electrical part is attached to a central prop (auxiliary prop) shown in Figs. 1 to 2. Fig. 6 is a perspective view showing the structure of the floor panel shown in Fig. 1.

In Figs. 1 through 6, reference numeral 1 is a floor base formed on a surface B of a base floor. Reference numeral 11 is a skin, which is a structural element of the floor base 1 and formed of rectangular synthetic resin to which a press molding process is added. In the skin 11, there are formed convex portions 11a, 11a, ... integrally projecting to the upper surface side in the four corners and the central portion and concave portions 11b, 11b, ... on the lower surface side by the press molding process.

In the skin 11 in which concave portions 11b, 11b ... are forming the prop portions, concrete 12 is packed in each of the concave portions 11b, 11b, ... in a state that the openings of the concave portions 11b, 11b, ... are directed upward, and the concrete is hardened, thereby forming a central auxiliary prop 14 whose height is slightly lower than that of the props 13, 13, ... formed at the four corners. In this case, as concrete 12 to be packed in the concave portions 11b, 11b, ..., there is used ultra-high-strength special lightweight concrete, which is formed of high strength inorganic material mixing a composition containing cement, silica, a special addition agent with thermosetting melamine resin. Then, concrete 12 packed in each of the concave portions 11b, 11b, ... is hardened by applying vibration to the skin 11.

Thereby, as shown in Fig. 4, there can be generated the floor base 1 having the props 13, 13, ..., with high strength of the four corners in which concrete 12 having extremely high compression is packed as reinforcing material, and the auxiliary prop 14.

On the upper surface of the skin 11, there are formed two hooking projections 15 for a separation hook in each side to be separated from an outer wall surface of the auxiliary prop 14. On an edge portion of each side, there are formed two butting projections 16 for preventing the overlap of the skin of the adjacent floor base 1. Further, on the upper surface of the skin 11, there are formed projection line portions 17 (see Fig. 2) having a drain hole 17a in both end portions of the longitudinal direction other than the above-mentioned projections.

On the floor base 11 in which concrete 12 is packed in the concave portions 11b, 11b, ... of the skin 11 and props 13, 13, ... 14 are integrally formed, an adjusting screw 2 with a plate for adjusting the height is embedded in the upper surface of each of props 13, 13, ... of the four corners. More specifically, on the upper surface portion of the convex portion of 11a, 11a, ..., constituting the props 13, 13, ... there is formed a storing space 11c comprising a storing hole 131 for a base seat portion 21 of the adjusting screw 2 with plate, a storing and holding hole 132 for a nut 23 screwed to a bolt 22 (see Fig. 5) of the adjusting screw 2 with plate, and a relief hole 133 for the bolt 22 of the adjusting screw 2 with plate in a stepped form. The adjusting screw 2 with plate, which comprises the base seat portion 21, the bolt 22, and the nut screwed to the bolt 22, is stored in the concave space portion 11c having these holes 131, 132, and 133. An angular hole 21a engaging with a hexagonal wrench is formed in the central portion of the upper portion of the base seat portion 21 of the adjusting screw 2 with plate. The hexagonal wrench is inserted into the angular hole 21a through a wrench through hole 30 formed on the four corners of the floor panel 3, thereby making it possible to easily adjust the height of each of the props 13, 13, ... from the upper surface of the floor panel 3 (the rickety state of the floor panel 3 and the height). Moreover, a storing space 11d is formed on an upper side and a U-shape groove 14a (see Fig. 6) is formed in each side of the auxiliary prop 14. Then, as shown in Fig. 6, if an electrical part 51 such as a power plug socket, a distributor, a connector, a receiver, a transmitter, and the like is embedded in the storing space 11d in the auxiliary prop 14, the groove 14a is used as an outlet for a cable 52 or an inlet.

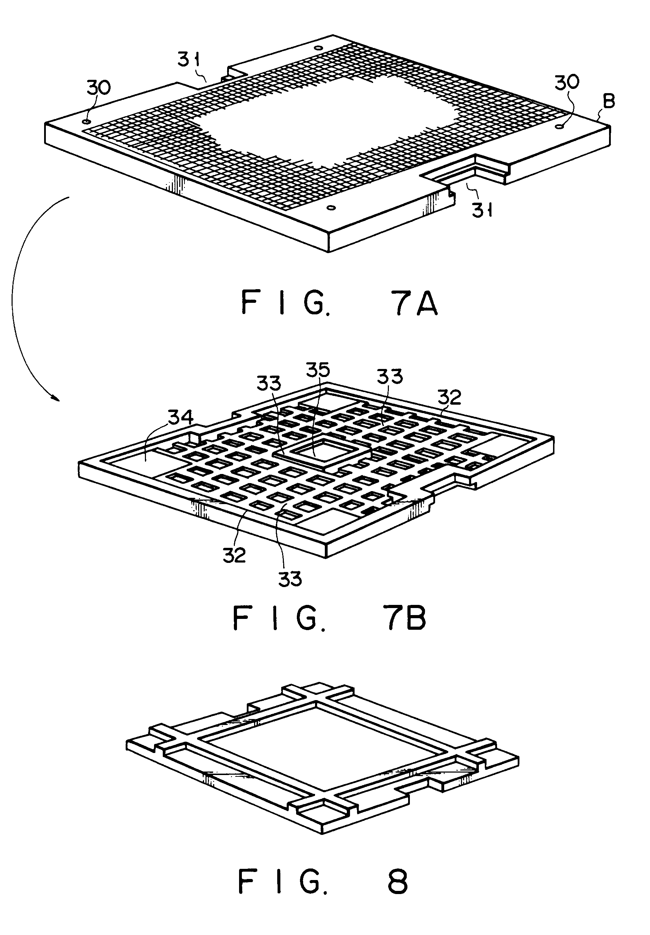

A floor panel 3, is supported at a constant position on the floor base 1 through props 13, 13, .... In this case, as shown in Figs. 5 and 7A, there are formed wrench-through holes 30 at four corners corresponding to the adjusting screws 2 for a plate, which are embedded in the upper surface of each of the props 13, 13, ... formed in the floor base 1, and for adjusting the height. Moreover, rectangular opening portions 31, 31 are respectively formed in the opposing two sides. Also, a main rib 32 having a constant width is formed in the peripheral portion of the lower surface, and an auxiliary rib 33 is formed in a face portion other than the main rib 32. Moreover, in the lower portion of the floor panel 3, there are formed prop connecting portions 34 and 35 connecting to the respective props 13, 13, ..., 14 formed in the floor base 1 through a shock absorbing member in a state that they are enclosed with the main rib 32 and the auxiliary rib 33. At the time of construction, the respective props 13, 13, ..., 14 are engaged with the respective ribs 32 and 33, and the floor panel 3 is fixed at the constant position on the floor base 1. In this case, in a state that a large load is not applied to the floor panel 3, a load, which is applied to the shock absorbing member between the auxiliary prop 14 formed in the central portion on the floor base 1 and the prop connecting portion 35 formed in the central portion of the lower surface of the floor base 3, is considerably small. The prop connecting portions 34 and 35 or the thickness of the shock absorbing member are adjusted such that in case a large load is applied to the base panel 3 the auxiliary prop 14 of the central portion receives a part of the load. Moreover, as shown in Fig. 6, if the electrical part 51 such as the power plug socket, the distributor, the connector, the receiver, the transmitter, and the like is embedded in the auxiliary prop 14, there is used a floor panel 3s in which a hole is formed, in advance, in the prop connecting portion 35 formed to correspond to the auxiliary prop 14 of the back surface of the panel shown in Fig. 7B.

A connection piece 4 has insertion holes into which the props 13 of the corner portions are inserted. The connection piece is placed over the props 13, 13, ... of the corners when the adjacent floor bases 1, 1, ... are mutually connected.

A horizontal separator 5 forms a wiring layer. The separator 5 is hooked on two hook projection portions 15 and 15 formed on each side to be spaced from the outer wall surface of the auxiliary prop 14 on the floor base 1 and which is guided to an arbitrary space on the floor base 1 to be divided in the upper and lower directions. In this case, a hinge portion is formed on the upper side of the hook portion to be opened upward. Normally, the horizontal separator 5 is secured to a fixed position where the space between the floor base 1 and the floor panel 3 is divided into two by a leg portion formed on both sides of the hook portions.

As mentioned above, concrete 12 is poured into the concave portions 11b, 11b, ... of the skin 11, and hardened for a short period of time by applying vibration to the skin 11. By this simple and easy manufacturing method, there can be efficiently manufactured the floor base 1 integrally having strong props 13, 13, ..., 14. Moreover, in the above-mentioned floor base 1, since the skin 11 formed of the rectangular synthetic resin sheet constitutes the main body (base) and strong props 13, 13, ..., 14 can be integrally formed, the floor base can be manufactured with low cost by the simple manufacturing method and the structure comprises only a small number of parts.

The construction work of the above-structured system floor will be carried out as follows:
First, the floor bases 1, 1, ... are sequentially juxtaposed on a basic floor surface B such that their ends are arranged in order. Then, the connection pieces 4 are inserted onto the props 13, 13, ... of the corners, thereby the juxtaposed floor bases 1, 1, ... are coupled to each other. The floor bases 1, 1, ... can be formed on the base floor surfaces B by this simple manner. Thereafter, the horizontal separator 5 is fixed to be hooked to the arbitrary hook projection portions 15, 15 on the floor base 1, and a predetermined wiring passage, a duct and the like are formed, and a predetermined wiring process is carried out. Thereafter, the floor panels 3, 3, ... are mounted on the floor bases 1, 1, .... In this case, the floor panels 3 are supported on the props 13 of four corners, which are formed on the floor bases 1, and the central auxiliary prop 14 through the shock absorbing material. Moreover, the props 13 of four corners are engaged with the main rib 32 of the floor panel 3 and the central auxiliary prop 14 is engaged with the auxiliary rib 33, thereby the floor panel 3 is secured to the fixed position on the floor base 1. In this case, a load to be applied to the floor panel 3 is dispersed and the dispersed load is applied to the props 13 serving as a main prop, and the prop 14 serves as an auxiliary prop. In a state that a large load is not applied to the floor panel 3, a load, which is applied to the shock absorbing member between the auxiliary prop 14 formed in the central portion on the floor base 1 and the prop connecting portion 35 formed in the central portion of the lower surface of the floor base 3, is considerably small. When a large load is applied to the floor panel 3 the auxiliary prop 14 of the central portion functions upon receipt of a part of the load.

Moreover, in a case where the power plug, the distributor, and the connector are formed on the floor in a state that the floor mat is spread on the upper surface of the floor panel 3, these arbitrary electrical parts 51 are embedded in the auxiliary prop 14, and the cable 52 is formed through the groove 14a formed in the wall portion of the auxiliary prop 14, as shown in Fig. 6. Thereby, the various types of electrical parts 51 can be easily provided in the surface of the floor. In this case, in accordance with the mount of the electrical parts 51, there is used a floor panel 3s in which a hole is formed, in advance, in the prop connecting portion 35 formed to correspond to the auxiliary prop 14 of the back surface of the panel shown in Fig. 7B.

The adjustment of flatness after the floor panel 3 is constructed and that of the rickety state are performed as follows.

The hexagonal wrench is inserted into one of wrench-through holes 30 formed in the four corners of the floor panel 3. The top end of the wrench is engaged with the angular hole 21a, which is formed in the central portion of the upper portion of the base seat portion 21 of the adjusting screw 2 with plate. Then, the adjusting screw is rotated, thereby the adjustment of height can be performed in a state the floor panel 3 is constructed.

The construction of the system floor (multifunctional system floor) is completed through the above-mentioned working.

In the above-structured system floor shown in the embodiment, the skin 11 formed of the rectangular synthetic resin sheet is formed in the main body (base) and strong props 13, 13, ..., 14 can be integrally formed. The floor base 1 can be manufactured by the simple manufacturing processes and the floor base 1 can be easily manufactured by the small number of parts. Thereby, the system floor having high reliability can be provided with low cost. Moreover, the main rib 32 and the auxiliary rib 33, which are formed in the lower portion of the floor panel 3, are respectively engaged with the props 13 and 14 of the corner portions and the central portion, which are formed on the floor base 1. Then, the floor panel 3 is supported at the constant position on the floor base 1. Due to this, by the simple structure having the ribs 32 and 33 serving as the reinforcing members for the floor panel 3, the floor panel 3 can be secured to the fixed position on the floor base and supported. Also, the weight of the floor panel can be lightened and the cost thereof can be reduced. Moreover, the floor structure can be simplified and easily and quickly constructed. Furthermore, the floor structure has high durability to fully withstand the large load.

According to the above-mentioned embodiment, the floor panel 3 is supported at the fixed position on the floor base 1 by the props 13 of the corners and the auxiliary prop 14 of the central portion, which are formed on the floor base 1. Moreover, the auxiliary prop 14 of the central portion functions when the large load is applied to the floor panel 3. Due to this, by use of the structure having the minimum number of props, there can be realized the system floor having high durability to fully withstand the large load, and excellent conformability.

Fig. 8 shows the rib structure of the floor panel according to the other embodiment. This embodiment shows the floor panel structure having a rib, which are shaped in parallel crosses, and which is parallel with each side. The props 13 of the corners are engaged with two sides of the rib, and the floor panel is supported at the fixed position on the floor base 1.

In the above embodiment, the floor panel 3 is supported by five props 13 and 14 formed on the floor base 1. However, it is possible to support the floor panel 3 by four props 13 of the corners. Moreover, according to the above embodiment, the respective convex portions 11a and 11c, which are integrally project to the upper surface side, are formed in the four corners of the skin 11 and the central portion. The concave portions 11b are formed in the lower surface side, and ultra-high-strength special light-weight concrete 12 is packed therein, thereby there is formed the central auxiliary prop 14, which is slightly lower than the props 13 of the four corners, integrated in the skin 11. However, it is possible to pack hardening material such as the other concrete material into the concave portions 11b. Moreover, the structure of the floor base and that of the floor panel are not limited to the above-mentioned structure, and the other sheet-like material may be used.

## Claims

1. A system floor comprising a rectangular floor base member (1) with protruding props (13,14) and a floor panel (3) supported by said props (13,14); a first storing space (11c) being formed on the upper surface of each said props (13);
characterized in that
said floor base member (1) has the protruding props (13) integrally formed at least at each corner thereof;
height adjusting members (2) are embedded in the first storing space (11c) of each prop (13), said height adjusting members (2) being provided with means for variably adjusting the height of a support position in a predetermined range between a lower position essentially corresponding to an upper surface of the prop (13) and a higher position above the upper surface of the prop (13); and
said floor panel (3) comprises through holes (30) arranged corresponding to the positions of the height adjusting members (2) and allowing insertion of a tool for adjusting the support position of the respective height adjusting member (2).

2. The system according to claim 1, characterized in that a further protruding prop (14) is provided in a central portion of said floor base member (1) and a second storing space (11d) is formed on an upper surface of said prop (14) in the central portion;
said second storing space (11d) being formed so as to accomodate an electrical component (51) embedded therein; and
a hole portion (35) is formed in the central portion of the floor panel (3), through which an upper surface of the electrical component (51) is exposed.

3. The system floor according to claim 1 or 2, characterized in that said height adjusting member (2) comprises a nut (23) embedded in the first storing space (11c), and a bolt (22) with a seat (21) screwed to said nut (23).

4. The system floor according to claim 1, 2 or 3, characterized in that said floor base member (1) is provided with a rectangular synthetic resin sheet serving as a skin;
the integrally formed protruding props (13) are formed by convex portions (11a) integrally formed with the sheet and projecting to the upper surface side on at least four corners of the sheet;
concave portions (11b) are formed in an inner surface of each convex portion (11a); and
concrete (12) is filled in said concave portions (11b).

5. The system floor according to claim 4, characterized in that a nut embodying portion (132) projecting into said first storing space (11c) is formed in the convex portion (11a), and the nut (23) is embedded in said nut embodying portion (132).

6. The system floor according to any one of claims 1 to 5, characterized in that a butting projection (16) for preventing the overlap of adjacent floor base members (1) is formed in an edge portion or a part of the edge portion of said floor base member (1).

7. A method for manufacturing a floor base (1), comprising the steps of:
forming convex portions (11a) integrally projecting to the upper surface side on at least four corners of a skin (11) formed of a rectangular synthetic resin sheet;
forming concave portions (11b) in the inner surface of said convex portions (11a);
filling concrete (12) into said concave portions (11b); and hardening said concrete (12) thus forming protruding props (13) integrally with said floor base.

8. The method according to claim 7, characterized in that ultra-high-strength special light-weight concrete (12) formed of high-strength inorganic material is filled into the concave portions (11b), and said concrete is hardened in said concave portions (11b) by applying vibration to said skin (11).

## Patentansprüche

1. Systemfußboden, umfassend ein rechteckiges Fußbodenbasiselement (1) mit hochragenden Stützen (13, 14) und einem von den Stützen (13, 14) getragenen oder abgestützten Fußbodenpaneel (3), wobei an der Oberseite einer jeden Stütze (13) ein erster Aufnahmeraum (11c) geformt ist,
dadurch gekennzeichnet, daß
das Fußbodenbasiselement (1) die hochragenden Stützen (13) zumindest an jeder Ecke desselben materialeinheitlich angeformt aufweist,
in den ersten Aufnahmeraum (11c) jeder Stütze (13) Höheneinstellelemente (2) eingelassen sind, die mit Mitteln zum variablen Einstellen der Höhe einer Stützposition in einem vorbestimmten Bereich zwischen einer im wesentlichen einer Oberseite der Stütze (13) entsprechenden unteren Position und einer höheren, über der Oberseite der Stütze (13) gelegenen Position versehen sind, und
das Fußbodenpaneel (3) Durchgangs-Öffnungen oder -Bohrungen (30) aufweist, die entsprechend den Positionen der Höheneinstellelemente angeordnet sind und das Einführen eines Werkzeugs zum Einstellen der Stützposition des betreffenden Höheneinstellelements (2) erlauben.

2. System(fußboden) nach Anspruch 1, dadurch gekennzeichnet, daß eine weitere hochragende Stütze (14) in einem Mittelbereich des Fußbodenbasiselements (1) vorgesehen ist und ein zweiter Aufnahmeraum (11d) an einer Oberseite der Stütze (14) im Mittelbereich geformt ist,
der zweite Aufnahmeraum (11d) so geformt ist, daß er ein in ihn eingelassenes elektrisches Bauelement (51) aufnimmt, und
im Mittelbereich des Fußbodenpaneels (3) ein Öffnungsabschnitt (35) geformt ist, durch den hindurch eine Oberseite des elektrischen Bauelements (51) nach außen hin freiliegt.

3. Systemfußboden nach Anspruch 1 oder 2, dadurch gekennzeichnet, daß das Höheneinstellelement (2) eine in den ersten Aufnahmeraum (11c) eingelassene (Schrauben-)Mutter (23) und einen in die Mutter (23) eingeschraubten Schraubbolzen (22) mit einem Sitz (21) aufweist.

4. Systemfußboden nach Anspruch 1, 2 oder 3, dadurch gekennzeichnet, daß das Fußbodenbasiselement (1) mit einer als eine (Außen-)Haut dienenden rechteckigen Kunstharzlage versehen ist,
die materialeinheitlich angeformten, hochragenden Stützen (13) durch Konvexabschnitte (11a) gebildet sind, die mit der Lage materialeinheitlich ausgebildet sind und an mindestens vier Ecken der Lage zur Oberflächenseite hochstehen,
in einer Innenfläche jedes Konvexabschnitts (11a) Konkavabschnitte (11b) geformt sind und
in die Konkavabschnitte (11b) Beton eingefüllt ist.

5. Systemfußboden nach Anspruch 4, dadurch gekennzeichnet, daß im Konvexabschnitt (11a) ein in den ersten Aufnahmeraum (11c) hineinreichender Mutterfassungsabschnitt (132) geformt ist und die Mutter (23) in den Mutterfassungsabschnitt (132) eingelassen ist.

6. Systemfußboden nach einem der Ansprüche 1 bis 5, dadurch gekennzeichnet, daß in einem Randabschnitt oder einem Teil des Randabschnitts des Fußbodenbasiselements (1) ein Anstoßvorsprung (16) zur Verhinderung der Überlappung benachbarter Fußbodenbasiselemente (1) geformt ist.

7. Verfahren zur Herstellung einer Fußbodenbasis (1), umfassend die folgenden Schritte:
Formen von materialeinheitlich zur Oberflächenseite hochstehenden Konvexabschnitten (11a) an mindestens vier Ecken einer aus einer rechteckigen Kunstharzlage geformten (Außen-) Haut (11),
Formen von Konkavabschnitten (11b) in der Innenfläche der Konvexabschnitte (11a),
Einfüllen von Beton (12) in die Konkavabschnitte (11b) und
Aushärten- oder Abbindenlassen des Betons (12) zwecks Ausbildung von mit der Fußbodenbasis materialeinheitlichen hochragenden Stützen (13).

8. Verfahren nach Anspruch 7, dadurch gekennzeichnet, daß in die Konkavabschnitte (11b) ein Spezial-Leichtbeton (12) ultrahoher Festigkeit aus einem hochfesten, anorganischen Material eingefüllt und der Beton in den Konkavabschnitten (11b) durch Schwingungseinwirkung auf die Haut (11) ausgehärtet bzw. abbinden gelassen wird.

## Revendications

1. Système de plancher comprenant un élément de base de plancher rectangulaire (1) avec des étais (13, 14) en saillie et un panneau de plancher (3) supporté par lesdits étais (13, 14) ; un premier espace de stockage (11c) étant formé sur la surface supérieure de chacun desdits étais (13) ;
caractérisé en ce que ledit élément de base de plancher (1) comporte les étais en saillie (13) formés de manière intégrée au moins dans chaque coin de celui-ci ;
en ce que des éléments de réglage en hauteur (2) sont noyés dans le premier espace de stockage (11c) de chaque étai (13), lesdits éléments de réglage en hauteur (2) étant pourvus de moyens pour régler de façon variable la hauteur d'une position de supportage dans une plage prédéterminée entre une position basse qui correspond essentiellement à une surface supérieure de l'étai (13) et une position haute au-dessus de la surface supérieure de l'étai (13) ; et
en ce que ledit panneau de plancher (3) comprend des trous traversants (30) agencés en correspondance des positions des éléments de réglage en hauteur (2) et permettant l'introduction d'un outil afin de régler la position de supportage de l'élément réglable en hauteur respectif (2).

2. Système selon la revendication 1, caractérisé en ce qu'il est prévu un autre étai en saillie (14) dans une partie centrale dudit élément de base de plancher (1), et un second espace de stockage (11d) est formé sur une surface supérieure dudit étai (14) dans la partie centrale ;
en ce que ledit second espace de stockage (11d) est formé de manière à recevoir un composant électrique (51) noyé dans celui-ci ; et
en ce qu'une partie de trou (35) est formée dans la partie centrale du panneau de plancher (3), à travers laquelle une surface supérieure du composant électrique (51) est exposée.

3. Système de plancher selon l'une ou l'autre des revendications 1 et 2, caractérisé en ce que ledit élément de réglage en hauteur (2), comprend un écrou (23) noyé dans le premier espace de stockage (11c), et un boulon (22) avec un siège (21) vissé dans ledit écrou (23).

4. Système de plancher selon l'une quelconque des revendications 1, 2 ou 3, caractérisé en ce que ledit élément de base de plancher (1) est pourvu d'une feuille de résine synthétique rectangulaire servant de peau ; en ce que les étais en saillie (13) formés de façon intégrée sont formés par des parties convexes (11a) formées de façon intégrée et se projetant sur le côté de la surface supérieure au moins dans les quatre coins de la feuille ;
en ce que des parties concaves (11b) sont formées dans une surface intérieure de chaque partie convexe (11a) ; et
en ce que du ciment (12) est rempli dans lesdites parties concaves (11b).

5. Système de plancher selon la revendication 4, caractérisé en ce qu'une partie (132) formant écrou, en projection à l'intérieur dudit premier espace de stockage (11c), est formée dans la partie convexe (11a), et en ce que l'écrou (23) est noyé dans ladite partie (132) formant écrou.

6. Système de plancher selon l'une quelconque des revendications 1 à 5, caractérisé en ce qu'une projection de butée (16) destinée à empêcher le chevauchement d'éléments de base de plancher adjacents (1) est formée dans une partie de bordure ou dans une partie de la partie de bordure dudit élément de base de plancher (1).

7. Procédé pour fabriquer une base de plancher (1) comprenant les étapes consistant à :
former des parties convexes (11a) qui se projettent de façon intégrée sur le côté de surface supérieur et dans au moins quatre coins d'une peau (11) formée d'une feuille de résine rectangulaire ;
former des parties concaves (11b) dans la surface inférieure desdites parties convexes (11a) ;
remplir du ciment (12) dans lesdites parties concaves (11b) ; et
faire durcir ledit ciment (12) formant ainsi des étais en saillie (13) de façon intégrée avec ladite base de plancher.

8. Procédé selon la revendication 7, caractérisé en ce que du ciment léger spécial à très haute résistance (12) formé de matériau inorganique à haute résistance est rempli dans les parties concaves (11b), et en ce qu'on fait durcir ledit ciment dans lesdites parties concaves (11b) en appliquant des vibrations à ladite peau (11).
